# EUROPEAN PATENT APPLICATION

(11) **EP 1 641 056 A2**
(43) Date of publication of application: **29.03.2006**
(21) Application number: 05018778.0
(22) Date of filing: 30.08.2005
(51) Int. Cl.: H01L 51/52, H05B 33/22

(54) **Dispersion type electroluminescent element**

(30) Priority: 30.08.2004 JP 2004250155; 01.09.2004 JP 2004254116
(71) Applicant: FUJI PHOTO FILM CO., LTD., Minami-Ashigara-shi, Kanagawa (JP)
(72) Inventor: Matsuda, Naoto, Fuji Photo Film Co., Ltd, Minami-Ashigara-shi Kanagawa (JP); Nakanishi,Masatoshi, Fuji Photo Film Co., Ltd, Minami-Ashigara-shi Kanagawa (JP); Yamashita, Seiji, Fuji Photo Film Co., Ltd, Minami-Ashigara-shi Kanagawa (JP)
(74) Representative: HOFFMANN EITLE

(57) **Abstract**

An electroluminescent element comprising: a pair of electrodes at least one of which is a transparent electrode; and a luminescent-particle-containing layer provided between the electrodes and comprising an organic binder and luminescent particles, wherein the electroluminescent element further comprises at least one interlayer which makes substantially no contribution to luminescence and is provided between the transparent electrode and the luminescent-particle-containing layer, the interlayer comprising an organic polymeric compound having a softening point of 140°C or higher as a binder.

## Description

### FIELD OF THE INVENTION

The present invention relates to dispersion type electroluminescent elements having a luminescent-particle-containing coating layer containing electroluminescent (EL) particles dispersed therein.

### BACKGROUND OF THE INVENTION

Electroluminescent (hereinafter referred to also as "EL") particles are luminescent particles of the voltage excitation type, and a dispersion type EL element is known which is a luminescent element containing such luminescent particles interposed between electrodes. The dispersion type EL element generally has a structure comprising two electrodes at least one of which is transparent and, interposed between these, a layer comprising a binder having a high permittivity and luminescent particles dispersed therein. This element luminesces upon application of an alternating-current electric field between the two electrodes. Scuh luminescent elements employing luminescent particles can be produced in a thickness of several millimeters or smaller and have many advantages, for example, that they are surface light-emitting devices and are reduced in heat generation. Because of this, the luminescent elements are used in applications such as traffic signs, various interior or exterior illuminators, light sources for flat panel displays such as liquid-crystal displays, and light sources for large-area advertising illuminators.

Dispersion type EL elements have merits that they can be formed as flexible elements employing a plastic substrate because the production thereof does not necessitate a high-temperature process, that they can be produced at low cost through relatively easy steps without using a vacuum apparatus, and that the luminescence color of an element can be easily regulated by mixing two or more kinds of luminescent particles differing in luminescence color. The EL elements are hence applied to the backlights of LCD's or the like and to display elements.

It is known that the luminance of a dispersion type EL element can be increased by heightening the intensity of the electric field to be applied to the luminescent-particle-containing layer. However, there has been a problem that heightening the voltage to be applied to a dispersion type EL element results in a decrease in durability.

There has hence been a desire for the development of a technique for inhibiting a dispersion type EL element from decreasing in luminance during lighting, i.e., a technique for improving_durability.

On the other hand, it has been proposed to dispose an interlayer between a luminescent-particle-containing layer and a transparent electrode in a dispersion type EL element to thereby improve adhesion between the two layers (see, for example, JP-A-8-288066). Furthermore, a technique has been proposed in which a thermoplastic resin having a softening point of 200°C or lower is used to form an interlayer in order to improve adhesion (see JP-A-10-134963). The latter technique, however, has been insufficient in the effect of improving durability under conditions used for obtaining a high luminance (e.g., operation at a frequency of 800 Hz or higher or a voltage of 150 V or higher).

In JP-B-7-58636 is proposed a technique for providing a high-luminance electroluminescent element by regulating the relationship between the size and distribution of the phosphor particles and the thickness of the phosphor layer so as to satisfy certain requirements. This technique, however, has been insufficient in obtaining an electroluminescent element which luminesces at a high luminance. In addition, there have been problems that an increase in luminance results in a considerable decrease in half-luminance life and an increase in area results in a reduced luminance.

On the other hand, there are many prior-art techniques concerning light-transmitting electroconductive electrodes (hereinafter referred to as transparent electrodes) (see, for example, *Denjiha Shîrudo Zairyô No Genjô To Shôrai,* published by Toray Research Center). In JP-A-9-147639 is proposed a transparent electrode having low resistance. However, even though the low-resistance transparent electrode can be used for heightening energy conversion efficiency/luminescence efficiency, this technique failed to sufficiently prolong the half-luminance life of the EL element operated at a high luminance.

In recent years, display elements are increasingly required to have a larger size. For example, in the case of use for a display advertisement, the larger the display element, the higher the advertising effect. Backlights for display advertisements are hence required to be large. Although large planar light sources employing fluorescent tubes, cold-cathode tubes, or the like are used in display advertisements, they are weighty, are difficult to carry, necessitate a large space for installation, and consume a large amount of electric power. Because of this, there have been considerable limitations on installation places and use environments. For application to these advertisements, the existing electroluminescent elements have limited uses because of their low luminance.

### SUMMARY OF THE INVENTION

An object of the invention is to provide a dispersion type electroluminescent element which is excellent not only in luminance but in durability and has an improved life. Another object of the invention is to provide a dispersion type electroluminescent element which is effective in attaining a screen size increase and which is excellent not only in luminance but in durability and has an improved life.

As a result of intensive investigations made by the present inventors, it has been found that durability is improved by disposing an interlayer comprising a polymeric compound having an adequate softening point between a layer containing luminescent particles dispersed therein and a transparent electrode. Namely, the inventors have found that a dispersion type electroluminescent element having any of the following constitutions (1) to (12) has improved durability and an improved life.
(1) An electroluminescent element comprising: a pair of electrodes at least one of which is a transparent electrode; and a luminescent-particle-containing layer provided between the electrodes and comprising an organic binder and luminescent particles, wherein the electroluminescent element further comprises at least one interlayer which makes substantially no contribution to luminescence and is provided between the transparent electrode and the luminescent-particle-containing layer, the interlayer comprising an organic polymeric compound having a softening point of 140°C or higher as a binder.
(2) An electroluminescent element comprising: a pair of electrodes at least one of which is a transparent electrode; and a luminescent-particle-containing layer provided between the electrodes and comprising an organic binder and luminescent particles, wherein the electroluminescent element further comprises at least one interlayer which makes substantially no contribution to luminescence and is provided between the transparent electrode and the luminescent-particle-containing layer, the interlayer comprising at least one organic polymer selected from polyesters, polycarbonates, polyamides, polyethersulfones, ultraviolet-cured resins obtained by a polymerization of acrylic esters and methacrylic esters, thermoset cyanate resins, and thermoset epoxy resins as a binder in an amount of 50% by volume or larger based on materials constituting the interlayer.
(3) The electroluminescent element according to (1), wherein the interlayer has a thickness of from 1 µm to 10 µm.
(4) The electroluminescent element according to (2), wherein the interlayer has a thickness of from 1 µm to 10 µm.
(5) The electroluminescent element according to (1), wherein the transparent electrode has a surface resistivity of from 0.05 to 80 Ω/□.
(6) The electroluminescent element according to (2), wherein the transparent electrode has a surface resistivity of from 0.05 to 80 Ω/□
(7) The electroluminescent element according to (1), wherein the transparent electrode comprises: a layer comprising a metal oxide; and a pattern layer formed in a net or stripe arrangement and comprising at least one member selected from metals and alloys.
(8) The electroluminescent element according to (2), wherein the transparent electrode comprises: a layer comprising a metal oxide; and a pattern layer formed in a net or stripe arrangement and comprising at least one member selected from metals and alloys.
(9) The electroluminescent element according to (1), wherein the transparent electrode comprises: a layer comprising a metal oxide; and a metal layer.
(10) The electroluminescent element according to (2), wherein the transparent electrode comprises: a layer comprising a metal oxide; and a metal layer.
(11) The electroluminescent element according to (1), wherein the luminescent particles has a size of from 1.0 to 15 µm in terms of an average diameter of corresponding spheres.
(12) The electroluminescent element according (2), wherein the luminescent particles has a size of from 0.1 to 25 µm in terms of an average diameter of corresponding spheres.

The dispersion type electroluminescent elements of the invention are excellent not only in luminance but in durability and have a long life. Furthermore, the dispersion type electroluminescent elements of the invention are effective in attaining a screen size increase, are excellent not only in luminance but in durability, and have a long life.

### DETAILED DESCRIPTION OF THE INVENTION

The invention will be explained below in detail. First, the first invention of the present invention is explained.

The dispersion type EL element as the first invention comprises a pair of opposed electrodes at least one of which is a transparent electrode and, disposed between the electrodes, a luminescent-particle-containing layer comprising an organic binder and luminescent particles dispersed therein, the electroluminescent element having at least one interlayer which makes substantially no contribution to luminescence and has been disposed between the transparent electrode and the luminescent-particle-containing layer, the interlayer containing an organic polymeric compound having a specific softening point as a binder.

### <Interlayer>

The interlayer making substantially no contribution to luminescence (hereinafter referred to simply as "interlayer"), which is disposed between a luminescent-particle-containing layer and a transparent electrode, is explained first.

In the invention, the term "making substantially no contribution to luminescence" means that the interlayer does not have luminescent performance in such a degree as to contribute to the luminescence of the EL element. The interlayer also can contain luminescent particles as long as the amount of the luminescent particles contained in the interlayer is up to 30% by mass based on the total amount of all luminescent particles contained in the whole EL element. The amount of the luminescent particles contained in the interlayer is preferably up to 20% by mass, more preferably up to 10% by mass, based on all luminescent particles contained in the whole EL element. Incorporation of luminescent particles in an amount exceeding 30% by mass is undesirable because this results in impaired durability.

Disposition of this interlayer can attain both high luminance and durability.

Although at least one such interlayer suffices, a constitution including two or more such interlayers may be employed. The total thickness of the interlayers is preferably from 100 nm to 100 µm, more preferably from 1 µm to 50 µm, even more preferably from 1 µm to 20 µm, most preferably from 1 µm to 10 µm. As long as the thickness of the interlayer is within that range, the effect of improving durability is sufficient. That thickness range is preferred also because a high luminance is attained without reducing luminescent performance.

It is preferred that the interlayer be substantially transparent. The term "substantially transparent" hereinmeans that the transmittances measured respectively at 450 nm, 550 nm, and 610 nm each are 50% or higher.

The interlayer is characterized in that an organic polymeric compound having a specific softening point, i.e., a softening point of 140°C or higher, is contained therein as at least one binder serving as a constituent material. The softening point of the polymeric compound is preferably 170°C or higher, especially preferably 200°C or higher. By regulating the softening point of the polymeric compound to 140°C or higher, not only an increase in luminance can be attained with a lower voltage but also durability can be improved.

With respect to the softening points, reference may bemade to, e.g., *Polymer Hanotbook,* 3rded., Wiley-Interscience, Chapter VI "Glass Transition Point".

Any organic polymeric compound having a softening point of 140°C or higher may be used. However, preferred examples include polyesters, polycarbonates, polyamides, polyethersulfones, ultraviolet-cured resins (e.g., ones obtained by polymerizing acrylic esters and methacrylicesters), and thermoset resins (e.g., cyanate resins and epoxy resins).

Of these, preferred polymers having a high softening point are as follows. Preferred examples of the polyesters include polyesters formed from bisphenol A, terephthalic acid, and isophthalicacid (e.g. , U-Polymer, manufactured by Unichika, Ltd.) and polyesters formed from 4,4'-(3,3,5-trimethylcyclohexylidene)bisphenol, bisphenol A, terephthalic acid, and isophthalic acid.

Preferred examples of the polycarbonates include polycarbonates of
4,4'-(3,3,5-trimethyleyclohexylidene)bisphenol and bisphenol A and polycarbonates of
4,4'-(3,3,5,5-tetramethylcyclohexylidene)bisphenol and bisphenol A.

Preferred examples of the polyamides include polyacrylamide and poly(t-butylmethacrylamide).

Preferred examples of the ultraviolet-cured resins include ones obtained by crosslinking/polymerizing dipentaerythritol hexaacrylate.

Preferred examples of the thermoset resins include ones obtained by polymerizing cyanate compounds (e.g., PRIMASET PT-60, manufactured by Lonza Ltd.)

Preferred of those polymers for use as the binder are the polyesters, polycarbonates, and polyethersulfones which each have a softening point of 200°C or higher.

As long as the interlayer comprises any of those organic polymeric compounds having a high softening point, other organic polymeric compounds and other organic or inorganic compounds may be mixed therewith. However, the organic polymeric compound having a high softening point is used in an amount of preferably 50% by volume or larger, more preferably 70% by volume or larger, based on the constituent material of the interlayer (i.e., based on the solid components of the interlayer) . It is most preferred that at least one of the polyesters, polycarbonates, and polyethersulfones each having a softening point of 200°C or higher, among the binders enumerated above, be used in an amount of 50% by volume or larger based on the whole constituent material (solid components) of the interlayer and that the thickness of the interlayer be regulated to from 1 µm to 10 µm.

Examples of the compounds which may be optionally contained in the interlayer include particles of metal oxides, metal nitrides, and metal sulfides. These compounds can be incorporated in such an amount as not to substantially impair transparency. Specific examples of the optional compounds include particles of TiO₂, BaTiO₃ . SrTiO₃, PbTiO₃, KNbO₃, PbNbO₃, Ta₂O₃, BaTa₂O₆, LiTaO₃, Y₂O₃, Al₂O₃, ZrO₂, AlON, and ZnS and particles of silica gel and alumina. As the optional organic polymeric compounds, ones having a softening point outside the range shown above may be used without particular limitations.

The EL element of the invention may have an interlayer comprising an organic polymeric compound having a low softening point besides the interlayer described above, which comprises the organic polymeric compound having a high softening point. The EL element may further have an interlayer comprising an inorganic compound such as, e.g., silicon dioxide.

The EL element of the invention has the interlayer and a luminescent-particle-containing layer as essential constituent layers between the pair of opposed electrodes at least one of which is a transparent electrode. Preferred examples of the constitution of the layers ranging from the transparent electrode to the luminescent-particle-containing layer are shown below. However, the invention should not be construed as being limited to the following embodiments, in which only the layers ranging from the transparent electrode to the luminescent-particle-containing layer are shown.
(1) Transparent electrode layer/the interlayer/luminescent-particle-containing layer
(2) Transparent electrode layer/an interlayer comprising a polymeric compound having a low softening point/the interlayer/luminescent-particle-containing layer
(3) Transparent electrode layer/the interlayer/layer of a polymeric compound having a low softening point/luminescent-particle-containing layer
(4) Transparent electrode layer/an interlayer comprising silicon dioxide/the interlayer/luminescent-particle-containing layer
(5) Transparent electrode layer/the interlayer/an interlayer comprising silicon dioxide/luminescent-particle-containing layer
(6) Transparent electrode layer/an interlayer comprising silicon dioxide/an interlayer comprising a polymeric compound having a low softening point/the interlayer/luminescent-particle-containing layer

### <Transparent Electrode>

The electroluminescent element of the invention has apair of opposed electrodes at least one of which is a transparent electrode. Namely, the EL element has a transparent electrode layer on at least one side of the luminescent-particle-containing layer.

The transparent electrode can be obtained by evenly depositing a film of a transparent electroconductive material such as, e.g., indium-tin oxide (ITO), tin oxide, antimony-doped tin oxide, zinc-doped tin oxide, or zinc oxide on a glass substrate or on a transparent film such as, e.g., a poly(ethylene terephthalate) or triacetylcellulose base by a technique such as vapor deposition, coating fluid application, or printing.

Use may be made of a multilayer structure comprising high-refractive-index layers and a thin silver layer sandwiched between these. Furthermore, an electroconductive polymer such as a conjugated polymer, e.g., polyaniline or polypyrrole, can be advantageously used.

These transparent electroconductive materials are described in, e.g., *Denjiha Shîrudo Zairyô No Genjô To Shôrai*, published by Toray Research Center and JP-A-9-147639.

The transparent electrode used in the invention preferably has a specific value of surface resistivity. The surface resistivity thereof is preferably 0.05 to 80 Ω/□ (Ω/square), more preferably 0.1 to 30 Ω/□. In case where the surface resistivity thereof is lower than 0.05 Ω/□, sufficient light-transmitting properties are not obtained. In case where the surface resistivity thereof exceeds 80 Ω/□, luminance unevenness and deterioration are apt to occur.

The surface resistivity of the transparent electrode is a value measured by the measuring method as provided for in JIS K7194.

It is preferred that the transparent electrode in the invention should have a thin layer comprising a metal oxide. For regulating the surface resistivity to a value within the range shown above, it is preferred to use a method in which the temperature of a transparent film used as the substrate for forming the transparent electrode thereon is set at a high value and the transparent electrode is grown at a low rate to thereby heightened crystallinity.

The transparent electrode in the invention preferably comprises a thin layer comprising a metal oxide and a layer superposed thereon. Such multilayer constitution of the transparent electrode is preferred because this is advantageous for regulating the surface resistivity to a value within the range shown above.

The thin layer comprising a metal oxide can be obtained by depositing a film of a transparent electroconductivematerial such as, e.g., indium-tin oxide (ITO), tin oxide, or zinc oxide on a transparent film, e.g., a poly(ethylene terephthalate) or triacetylcellulose base, by a technique such as vapor deposition, coating fluid application, or printing.

For forming the thin layer comprising a metal oxide, use may be made of a vapor-phase process such as sputtering or vacuum deposition. Furthermore, the thin layer may be formed by applying a paste of ITO or the like by a coating operation or screen printing, or may be formed by excessively heating a film.

Besides the materials shown above, i.e., indium-tin oxide (ITO), tin oxide, and zinc oxide, examples of the transparent electroconductive material for use in forming the thin layer comprising a metal oxide include metal oxides such as tin-doped tin oxide, antimony-doped tin oxide, and zinc-doped tin oxide.

Furthermore, as long as the specific value of surface resistivity is satisfied, a multilayer structure comprising high-refractive-index layers and a thin silver layer sandwiched between these or a transparent electrode comprising a conjugated polymer, e.g., polyaniline or polypyrrole, can also be used in place of the thin layer comprising a metal oxide. The term "high-refractive-index" used for the high-refractive-index layers in the multilayer structure comprising high-refractive-index layers and a thin silver layer sandwiched between these means that the layers have a higher refractive index than the organic binder used as a layer component and than the transparent film used as a substrate.

The layer superposed on the thin layer comprising a metal oxide preferably is a pattern layer formed in a net or stripe arrangement and comprising at least one member selected from metals and alloys.

A pattern layer constituted of thin metal lines formed in, e.g., a comb or grid arrangement can be superposed as the pattern layer on the thin layer comprising a metal oxide. Alternatively, use may be made of a method in which a pattern layer is formed on a transparent film and a thin layer comprising a metal oxide is then superposed thereon. A mesh comprising thin metal lines may be bonded to a thin layer comprising a metal oxide. A method may also be used in which thin metal lines are formed beforehand on a transparent film by vapor deposition or etching with a mask and a thin layer comprising a metal oxide is then formed on the thin metal lines by applying a composition for forming the thin layer or by vapor deposition. Furthermore, a method may be used in which the thin metal lines are formed on a thin layer comprising a metal oxide formed beforehand.

Disposition of the pattern layer is preferred because it improves electrical conductivity. The metal or alloy is preferably selected from copper, silver, aluminum, and alloys of these.

The thin lines constituting the pattern layer in a net or stripe arrangement may have any desired thickness. However, the thickness of each thin line is preferably from 0.5 to 20 µm. It is preferred that the thin metal lines have been disposed at a pitch of from 50 to 400 µm, especially from 100 to 300 µm.

The height (thickness) of the thin-line structure part in the pattern layer is preferably from 0.1 µm to 10 µm, especially preferably from 0.5 µm to 5 µm. Either of the thin-line structure part comprising a metal and/or an alloy and the thin layer comprising a metal oxide may be exposed on the surface. In either case, however, the electroconductive surface of the transparent electrode preferably has a smoothness (roughness) of 5 µm or less. From the standpoint of adhesion, the surface smoothness thereof is preferably from 0.01 µm to 5 µm, especially preferably from 0.05 µm to 3 µm.

The smoothness (roughness) of the electroconductive surface herein is expressed in terms of the average amplitude of recesses and protrusions in a measurement along the periphery of a 5-mm square with a three-dimensional surface roughness meter (e.g., SURFCOM 575A-3DF, manufactured by Tokyo Seimitsu Co., Ltd.). In the case of electroconductive surfaces whose surface roughness is beyond the resolving power of the surface roughness meter, the surface roughness thereof is determined through an examination with an STM or electron microscope.

With respect to the relationship among the width, height, and pitch of the thin metal lines, the width of each thin line is typically preferably from 1/10,000 to 1/10 the pitch of the thin lines although it may be determined according to purposes.

The same applies to the height of the thin metal lines. Namely, the height thereof is preferably in the range of from 1/100 to 10 times the width of each thin line.

A thin metal layer having an average thickness of 100 nm or smaller also can be advantageously used as the layer to be superposed on the thin layer comprising a metal oxide. Such a thin metal layer may be disposed on the thin layer comprising a metal oxide or may be interposed between the transparent film and the thin layer comprising a metal oxide

The metal to be used for forming the thin metal layer preferably is one which has high corrosion resistance and is excellent in malleability/ductility and other properties, such as Au, In, Sn, Cu, or Ni. However, the metal should not be construed as being limited to these.

It is preferred that the transparent electrode should have a high light transmittance. The light transmittance thereof is preferably 70% or higher, especially preferably 80% or higher.

In the case where the transparent electrode has the pattern layer, it is preferred to inhibit the transparent electrode from suffering a decrease in light transmittance. It is preferred to secure a light transmittance which is 80% or higher and is lower than 100%.

The wavelength at which the light transmittance is measured is 550 nm. The light transmittance of the transparent electrode can be measured with a spectrophotometer. <Luminescent-Particle-Containing Layer>

The luminescent-particle-containing layer will be explained next.

The luminescent particles which can be used in the luminescent-particle-containing layer possessed by the EL element of the invention may be any substance which shows electroluminescence. However, the base material of preferred luminescent particles for use in the invention is, for example, fine particles of a semiconductor comprising one or more elements selected from the group consisting of the Group II elements and the Group VI elements and one or more elements selected from the group consisting of the Group III elements and the Group V elements. Suitable elements are selected at will according to the necessary luminescence wavelength region. Examples thereof include CdS, CdSe, CdTe, ZnS, ZnSe, ZnTe, CaS, MgS, SrS, GaP, GaAs, and mixed crystals of two or more of these. Preferred of these are, for example, ZnS, CdS, and CaS. Other preferred examples of the base material of the particles include BaAl₂S₄, CaGa₂S₄, Ga₂O₃, Zn₂SiO₄, Zn₂GaO₄, ZnGa₂O₄, ZnGeO₃, ZnGeO₄, ZnAl₂O₄, CaGa₂O₄, CaGeO₃, Ca₂Ge₂O₇, CaO, Ga₂O₃, GeO₂, SrAl₂O₄, SrGa₂O₄, SrP₂O₇, MgGa₂O₄, Mg₂GeO₄, MgGeO₃, BaAl₂O₄, Ga₂Ge₂O₇, BeGa₂O₄, Y₂SiO₅, Y₂GeO₅, Y₂Ge₂O₇, Y₄GeO₈, Y₂O₃, Y₂O₂S, SnO₂, and mixed crystals of two or more of these. Preferred examples of the luminescence centers include ions of metals such as Mn and Cr and rare-earth elements.

Preferred of these are zinc sulfide, zinc selenide, and calcium sulfide. Also preferred are luminescent particles comprising any of these base materials and one or more of Cu, Mn, Al, Cl, Br, and I added thereto.

It is also preferred to use coated type luminescent particles such as those disclosed in JP-A-2004-137482.

The luminescent particles to be used in the invention most preferably are luminescent particles consisting mainly of zinc sulfide to which at least copper has been added (at least 90% of all metal ions contained in the whole particles are zinc) or coated type luminescent particles such as those disclosed in JP-A-2004-137482.

The particle size of the luminescent particles which can be used in the invention is preferably from 0.1 µm to 25 µm, more preferably from 1.0 µm to 20 µm, especially preferably from 1 µm to 15 µm, in terms of the average diameter of corresponding spheres. The coefficient of variation of the diameters of corresponding spheres is preferably 30% or lower, more preferably from 5% to 25% . Preferred methods usable for preparing the particles include the burning method, molten urea method, spray pyrolysis method, and hydrothermal method.

It is preferred that the particles synthesized have a multiple twin crystal structure. In the case of zinc sulfide, the spacing of the multiple twin crystals (stacking fault structure) is preferably from 1.0 nm to 15 nm, especially preferably 1 to 10 nm, more preferably 2 to 5 nm.

It is more preferred in the invention to use luminescent particles having any of the following features.
(a) Luminescent particles having an average particle size (diameter of corresponding spheres) of from 1.0 µm to 20 µm and a coefficient of particle size variation of from 5% to 25%.
(b) Luminescent particles characterized by being synthesized by the molten urea method and having an average particle size of from 1.0 µm to 20 µm.
(c) Luminescent particles characterized by being synthesized by the spray pyrolysis method and having an average particle size of from 1.0 µm to 20 µm.
(d) Luminescent particles characterized by being synthesized by the hydrothermal method and having a multiple twin crystal structure and an average particle size of from 1.0 µm to 20 µm.
(e) Luminescent particles characterized by having an average particle size of from 1.0 µm to 20 µm and comprising zinc sulfide particles having a multiple twin crystal structure inside at an average spacing of from 0.2 to 10 nm.
(f) Luminescent particles characterized in that the particles have an average particle size of from 1.0 µm to 15 µm and at least 30% of the particles comprise zinc sulfide particles having a major-axis length/minor-axis length ratio of 1.5 or higher.
(g) The luminescent particles as described under any one of (a) to (f) above, characterized by being coated with a non-luminescent shell layer having a thickness of 0.01 µm or larger.
(h) The luminescent particles as described under any one of (a) to (g) above which contain an activator comprising ions of at least one member selected from copper, manganese, silver, gold, and rare-earth elements.
(i) The luminescent particles as described under any one of (a) to (h) above which contain a co-activator comprising ions of at least one member selected from chlorine, bromine, iodine, and aluminum.
(j) The luminescent particles as described under any one of (a) to (i) above which contain an activator comprising copper ions and a co-activator comprising chlorine ions.

The durability-improving effect brought about by the disposition of the interlayer is remarkable especially when the luminescent particles are zinc sulfide particles activated with copper ions and chlorine ions and the size of the luminescent particles is 15 µm or smaller in terms of the average diameter of corresponding spheres. This EL element is an especially preferred embodiment of the invention.

Luminescent particles usable in the invention are preferably formed by the burning method (solid-phase process) in extensive use in this field. For example, in the case where zinc sulfide is used as a constituent material, luminescent particles can be produced in the following manner. Fine particles having a crystallite size of from 10 to 50 nm (usually called a raw powder) are formed by a liquid-phase process. These fine particles are used as primary particles, and an impurity called an activator is mixed therewith. The resultant mixture is subjected to first burning together with a fluxing agent in a crucible at a temperature as high as from 900 to 1,300°C for from 30 minutes to 10 hours to obtain particles. The intermediate luminescent particles obtained by the first burning are repeatedly washed wi th ion-exchanged water to remove an alkali metal or alkaline earth metal and the excess activator and co-activator. Subsequently, the intermediate luminescent particles obtained are subjected to second burning. In this second burning, the intermediate is heated (annealed) at a lower temperature of from 500 to 800°C for a shorter period of from 30 minutes to 3 hours than in the first burning. Through these burning operations, many stacking faults generate in the luminescent particles. It is preferred to suitably select conditions for the first burning and second burning so as to form fine particles and to enable the luminescent particles to come to have a larger number of stacking faults therein. It is possible to use a method in which an impact force in a certain range is applied to the product of the first burning, whereby the density of stacking faults can be greatly increased without destroying the particles. Preferred methods usable for the impact force application include: a method in which the intermediate luminescent particles are contacted/mixed with one another; a method in which the intermediate luminescent particles are mixed together with spheres of, e.g., alumina (ball mill method) ; a method in which the particles are caused to collide at an accelerated speed; and a method in which the particles are irradiated with ultrasonic. Thereafter, the luminescent particles obtained through the burning operations are etched with an acid, e.g., HCl, to remove the metal oxide adherent to the particle surface. Furthermore, the copper sulfide adherent to the surface is removed by washing with KCN. The particles are then dried. Thus, luminescentparticles can be obtained.

In the case where the constituent material is zinc sulfide or the like, it is preferred to use the hydrothermal method as a method of forming luminescent particles in order to introduce a multiple twin crystal structure into the luminescent particle crystals. In a system for the hydrothermal method, particles are in the state of being dispersed in an aqueous medium kept being sufficiently stirred. Zinc ions and/or sulfur ions, which cause particle growth, are externally added in the form of an aqueous solution to the reaction vessel at a regulated flow rate over a predetermined time period. Consequently, the particles in this system can freely move in the aqueous medium and the ions added can diffuse in the water and evenly cause particle growth. Because of this, the concentration of the activator or co-activator in each particle can be changed and, as a result, particles which are not obtainable by the burning method can be obtained. Furthermore, by regulating a particle size distribution, a nucleus formation stage and a growth stage can be clearly separated from each other. In addition, by regulating the degree of supersaturation during particle growth at will, the particle size distribution can be regulated and monodisperse zinc sulfide particles having a narrow particle size distribution can be obtained. It is preferred to conduct an Ostwald ripening stepbetween the nucleus formation stage and the growth stage from the standpoints of regulating the particle size and realizing a multiple twin crystal structure.

Zinc sulfide has exceedingly low solubility in water and this nature is considerably disadvantageous in particle growth by an ionic reaction in aqueous solutions. The higher the temperature, the higher the solubility of zinc sulfide in water. At temperatures of 375°C and higher, however, water is in a supercritical state and ion solubility therein decreases markedly. Consequently, the temperature tobe used for particle preparation is preferably from 100°C to 375°C, more preferably from 200°C to 375°C. The time period to be used for particle preparation is preferably up to 100 hours, more preferably from 5 minutes to 12 hours.

Another preferred method for increasing the solubility of zinc sulfide in water in the invention is to use a chelating agent. Preferred chelating agents for zinc ions are ones having one or more amino and/or carboxyl groups. Examples thereof include ethylenediaminetetraacetic acid (hereinafter referred to as EDTA), N-2-hydroxyethylethylenediaminetriacetic acid (hereinafter referred to as EDTA-OH), diethylenetriaminepentaacetic acid, 2-aminoethylethylene glycol tetraacetic acid, 1,3-diamino-2-hydroxypropanetetraacetic acid, nitrilotriacetic acid, 2-hydroxyethyliminodiacetic acid, iminodiacetic acid, 2-hydroxyethylglycine, ammonia, methylamine, ethylamine, propylamine, diethylamine, diethylenetriamine, triaminotriethylamine, allylamine, and ethanolamine.

In the case where the constituent metal ions and chalcogen anions are directly subjected to a precipitation reaction to synthesize the target particles without using precursors of the constituent elements, it is necessary to rapidly mix solutions of the two ingredients. In this case, it is preferred to use a double-jet type mixing vessel.

It is also preferred to use the molten urea method as a method of forming luminescent particles usable in the invention. The molten urea method is a method in which molten urea is used as a medium for synthesizing luminescent particles therein. Urea is held at a temperature not lower than the melting point thereof, and substances containing the elements constituting the base material of luminescent particles and constituting an activator are dissolved in the molten urea. A reaction accelerator is added according to need. For example, in the case where luminescent sulfide particles are synthesized, a sulfur source such as, e.g., ammonium sulfate, thiourea, or thioacetamide is added and caused to undergo a precipitation reaction. This melt is gradually heated to about 450°C. As a result, a solid is obtained which comprises a urea-derived resin and, evenly dispersed therein, luminescent particles or a luminescent-particle intermediate. This solid is finely pulverized and then burned in an electric furnace while pyrolyzing the resin. An inert atmosphere, oxidizing atmosphere, reducing atmosphere, ammonia atmosphere, or vacuum atmosphere is selected as an atmosphere for the burning, whereby luminescent particles comprising an oxide, sulfide, or nitride as a base material can be synthesized.

The spray pyrolysis method also is preferably used as a method for forming luminescent particles usable in the invention. A solution of a precursor for luminescent particles is formed into minute droplets with an atomizer, and the precursor is caused to undergo condensation or a chemical reaction within the droplets or a chemical reaction with a gas surrounding the droplets. Thus, luminescent particles or intermediate luminescent particles can be synthesized. By selecting suitable conditions for the droplet formation, fine spherical particles can be obtained which contain a slight amount of an impurity evenly distributed therein and have a narrowparticle size distribution. The atomizer to be used for forming minute droplets preferably is a two-fluid nozzle, ultrasonic atomizer, or electrostatic atomizer. The minute droplets formed with the atomizer are introduced into an electric furnace or the like with a carrier gas and heated. As a result, not only dehydration/condensation occurs but also substances present in the droplets undergo a chemical reaction with each other and sintering or undergo a chemical reaction with the surrounding gas, whereby the target luminescent particles or intermediate luminescent particles are obtained. The particles obtained are additionally burned according to need. For example, in the case where luminescent zinc sulfide particles are synthesized, a mixed solution of zinc nitrate and thiourea is atomized and pyrolyzed at about 800°C in an inert gas (e.g., nitrogen) to obtain spherical luminescent zinc sulfide particles. When a slight amount of an impurity such as, e.g., Mn, Cu, or a rare-earth element is dissolved beforehand in the mixed solution to be used as a starting material, the impurity comes to function as luminescence centers. Furthermore, in the case where a mixed solution of yttrium nitrate and europium nitrate is used as a starting solution, this starting solution is pyrolyzed at about 1,000°C in an oxidizing atmosphere to obtain luminescent yttrium oxide particles activated with europium. The ingredients in the droplets need not be in the state of being wholly dissolved, and ultrafine particles of silicon dioxide may be incorporated. Pyrolysis of minute droplets containing both a zinc solution and ultrafine particles of silicon dioxide gives luminescent zinc silicate particles.

Other methods which can be used for forming luminescent particles usable in the invention include vapor-phase processes such as the laser ablation method, CVD method, plasma-assisted CVD method,sputtering,resistance heating,electron beammethod, and a combination of any of these with fluidized-oil-surface vapor deposition and liquid-phase processes such as the double-decomposition method, method based on precursor pyrolysis reaction, reverse micelle method, method comprising a combination of any of these methods with high-temperature burning, and freeze drying method.

Particle preparation conditions in any of those methods are regulated, whereby luminescent particles having an average particle size of from 0.1 µm to 25 µm for use in the invention can be obtained.

It is more preferred that the luminescent particles have a non-luminescent shell layer on the surface of the particles. This shell layer preferably is formed in a thickness of 0.01 µm or larger by a chemical method subsequently to the preparation of fine particles serving as the cores of luminescent particles. The thickness of the shell layer is preferably from 0.01 µm to 1.0 µm. The non-luminescent shell layer can be made of an oxide, nitride, or oxy-nitride or a material having the same composition as the luminescent-particle base, except that the material has no luminescence center. Alternatively, the shell layer can be formed by epitaxially growing a material having a different composition on the luminescent-particle base material. Methods which can be used for forming a non-luminescent shell layer include vapor-phase processes such as a method comprising a combination of any of the laser ablation method, CVD method, plasma-assisted CVD method, sputtering, resistance heating, electron beam method, and the like with fluidized-oil -surface vapor deposition; liquid-phase processes such as the double-decomposition method, sol-gel method, ultrasonic chemical method, method based on precursor pyrolysis reaction, reverse micelle method, combinations of any of these methods with high-temperature burning, hydrothermal method, molten urea method, and freeze drying method; and the spray pyrolysis method.

In particular, the hydrothermal method, molten urea method, and spray pyrolysis method, which are suitable for use in the formation of luminescent particles, are suitable also for the synthesis of a non-luminescent shell layer. For example, in the case where a non-luminescent shell layer is deposited by the hydrothermal method on the surface of luminescent zinc sulfide particles, the procedure is as follows. The luminescent zinc sulfide particles serving as core particles are added to and suspended in a medium. As in the formation of the particles, a solution containing ions of a metal becoming the material constituting a non-luminescent shell layer and optionally further containing anions is externally added to the reaction vessel at a regulated flow rate over a predetermined time period. The contents of the reaction vessel are sufficiently stirred, whereby the particles can freely move in the medium and the ions added can diffuse in the medium to evenly cause particle growth. Because of this, a non-luminescent shell layer can be evenly formed on the surface of the core particles. The resultant particles are burned according to need. Thus, luminescent zinc sulfide particles having a non-luminescent shell layer on the surface can be synthesized.

In the case where the molten urea method is used for depositing a non-luminescent shell layer on the surface of luminescent zinc sulfide particles, the procedure is as follows. The luminescent zinc sulfide particles are added to a molten urea solution containing dissolved therein a salt of a metal becoming a non-luminescent shell layer material. Since zinc sulfide does not dissolve in urea, the solution is heated as in the formation of the particles to thereby obtain a solid comprising a urea-derived resin and, evenly dispersed therein, luminescent zinc sulfide particles and a non-luminescent shell layer material. This solid is finely pulverized and then burned in an electric furnace while pyrolyzing the resin. An inert atmosphere, oxidizing atmosphere, reducing atmosphere, ammonia atmosphere, or vacuum atmosphere is selected as an atmosphere for the burning, whereby luminescent zinc sulfide particles having on the surface thereof a non-luminescent shell layer comprising an oxide, sulfide, or nitride can be synthesized.

Furthermore, in the case where the spray pyrolysis method is used for depositing a non-luminescent shell layer on the surface of luminescent zinc sulfide particles, the procedure is as follows. The luminescent zinc sulfide particles are added to a solution containing dissolved therein a salt of a metal becoming a non-luminescent shell layermaterial. This solution is atomized and pyrolyzed to thereby yield a non-luminescent shell layer on the surface of the luminescent zinc sulfide particles. By selecting an atmosphere for the pyrolysis and an atmosphere for additional burning, luminescent zinc sulfide particles having on the surface thereof a non-luminescent shell layer comprising an oxide, sulfide, or nitride can be synthesized.

When these luminescent particles are used to produce an electroluminescent element, the particles are dispersed in an organic dispersion medium and this dispersion is applied to form a layer.

As the organic dispersion medium can be used an organic polymeric material or an organic solvent having a high boiling point. It is, however, preferred to use an organic binder constituted mainly of one or more organic polymeric materials.

The organic binder desirably is a material having a high permittivity. Examples thereof include a fluorine-containing polymeric compound (e.g., a polymeric compound comprising monomer units derived from fluoroethylene and trifluoromonochloroethylene) and a polysaccharide, poly(vinyl alcohol), or phenolic resin in which the hydroxyl groups have been cyanoethylated. The organic binder preferably comprises all or part of these polymers.

The proportion of such a binder to the luminescent particles is such that the content of the luminescent particles in the luminescent-particle-containing layer is preferably from 30 to 90% by mass, more preferably from 60 to 85% by mass, based on all solid components.

It is especially preferred that a polymeric compound in which hydroxyl groups have been cyanoethylated be used as a binder in an amount of at least 20% by mass, more preferably at least 50% by mass, based on the organic dispersion medium of the whole luminescent-particle-containing layer.

The thickness of the luminescent-particle-containing layer thus obtained is preferably from 1 µm to 200 µm, more preferably from 3 µm to 100 µm.

The luminescent unit comprising the luminescent-particle-containing layer described above, a dielectric layer (which will be described below), and the interlayer has an overall thickness of preferably from 3 µm to 500 µm, more preferably from 10 µm to 200 µm, most preferably from 30 µm to 150 µm.

### <Dielectric Layer>

The electroluminescent element of the invention preferably has a dielectric layer on that side of the luminescent-particle-containing layer which is opposite to the transparent electrode.

The dielectric layer can be made of any desired dielectric material which has a high permittivity, high insulating properties, and a high dielectric breakdown voltage. This material is selected from metal oxides and nitrides. Examples thereof include TiO₂, BaTiO₃, SrTiO₃, PbTiO₃, KNbO₃, PbNbO₃, Ta₂O₃, BaTa₂O₆, LiTaO₃, Y₂O₃, Al₂O₃, ZrO₂, AlON, and ZnS. These materials may be deposited as a thin crystalline layer or as a film having a particulate structure. A combination of these is also possible.

In the case of a thin crystalline layer, it may be either a thin film formed on a substrate by a vapor-phase technique such as, e.g., sputtering, or a sol-gel film formed from an alkoxides of barium, strontium, etc. In the case of a layer having a particulate structure, it can be formed using the same binders as those enumerated above with regard to the luminescent-particle-containing layer in the same manner as for the layer. It is preferred that the particles contained in the dielectric layer should be sufficiently smaller than the luminescent particles. Specifically, the size thereof is preferably from 1/3 to 1/1,000 the size of the luminescent particles.

The EL element of the invention has a constitution comprising a pair of opposed electrodes at least one of which is a transparent electrode and, sandwiched between the electrodes, the luminescent-particle-containing layer and the interlayer. In this constitution, the total thickness of the luminescent-particle-containing layer and the dielectric layer, which comprises a dielectric material and is optionally disposed adjacently to the luminescent-particle-containing layer, is preferably from 1.1 to 10 times, especially preferably from 1.5 to 5 times, the average particle size of the luminescent particles. When the fluctuations in interelectrode distance in the element constitution described above are expressed in terms of center-line average roughness Ra, then the relationship between Ra and the thickness of the luminescent-particle-containing layer, d, is preferably such that Ra is d/8 or smaller.

### <Back Electrode>

The electroluminescent element of the invention has an electrode (hereinafter referred to as "back electrode") on that side of the luminescent-particle-containing layer which is opposite to the transparent electrode. The back electrode may be made of the same materials and have the same constitution as the transparent electrode. Namely, the back electrode also can be a transparent electrode. It is, however, possible to make the back electrode have a different constitution.

In the case where the back electrode is made to have a constitution different from that of the transparent electrode, any desired material having electrical conductivity can be used. An electroconductive material is suitably selected from. metals such as gold, silver, platinum, copper, iron, and aluminum, graphite, and the like according to the type of the element to be produced, the temperatures to be used in production steps, etc. A transparent electrode, e.g., ITO, may be used as long as it has electrical conductivity as stated above. Furthermore, from the standpoint of improving luminance, it is important that the back electrode should have a high thermal conductivity. The thermal conductivity thereof is preferably 2.0 W/cm·deg or higher, especially preferably 2.5 W/cm·deg or higher.

It is also preferred to employ a metal sheet or metal mesh as the back electrode in order to secure high heat dissipation and electrical conductivity around the EL element.

### <Production Process>

In producing the EL element of the invention, it is preferred that the luminescent-particle-containing layer, dielectric layer, and interlayer each be formed by spin coating, dip coating, bar coating, spray coating, or the like by applying a coating fluid prepared by dissolving constituent materials in a solvent. It is especially preferred to use a printing technique usable for printing on various surfaces, such as screen printing, or a technique with which continuous application is possible, such as slide coating. For example, in screen printing, a dispersion prepared by dispersing luminescent particles or fine dielectric material particles in a solution of a polymer having a high permittivity is applied through a screen mesh. The thickness of the coating film can be regulated by selecting the thickness and percentage of openings of the mesh and the number of coating operations. By replacing the dispersion, a back electrode layer and other layers can be formed besides the luminescent-particle-containing layer and the dielectric layer. Furthermore, an EL element having an increased area can be easily produced by changing the size of the screen.

For application by such a coating operation, the constituent materials for the luminescent-particle-containing layer, dielectric layer, or interlayer are preferably formulated into a coating fluid by adding an appropriate organic solvent thereto. Preferred examples of the organic solvent include dichloromethane, chloroform, acetone, acetonitrile, methyl ethyl ketone, cyclohexanone, dimethylformamide, dimethylacetamide, dimethyl sulfoxide, toluene, and xylene.

The viscosity of the coating fluid is preferably from 0.1 to 5 Pa·s, especially preferably from 0.3 to 1.0 Pa·s. When the coating fluid for forming a luminescent-particle-containing layer or the coating fluid for forming a dielectric layer containing dielectric particles has a viscosity lower than 0.1 Pa·s, the coating fluid is apt to give a coating film having thickness unevenness and there are cases where the luminescent particles or dielectric particles separate out and sediment with the lapse of time after dispersion. On the other hand, in case where the viscosity of the coating fluid for forming a luminescent-particle-containing layer or of the coating fluid for forming a dielectric layer exceeds 5 Pa·s, it is difficult to apply the coating fluid at relatively high rates. The viscosity values are ones measured at 16°C, which is the same as the application temperature to be used.

It is especially preferred that the luminescent-particle-containing layer be formed by continuously applying the coating fluid with a slide coater, extrusion coater, or the like in a coating film thickness of from 5 µm to 50 µm on a dry basis.

In forming each functional layer on a support through coating fluid application, it is preferred that at least the steps ranging from application to drying be conducted continuously. The drying step is divided into a constant-drying-rate step in which the coating film is dried until it solidifies and a falling-drying-rate step in which the solvent remaining in the coating film is diminished. In the invention, since each functional layer has a high binder content, rapid drying tends to result in the drying of a surface layer only and cause convection currents within the coating film. This is apt to result in the so-called Benard cells. In addition, abrupt swelling of the solvent is apt to occur to cause blistering troubles. Thus, the resultant coating film has considerably impaired evenness. Conversely, in case where the temperature of final drying is too low, the solvent partly remains in each functional layer and this produces an adverse influence on a step to be conducted later in EL element production, such as, e.g., the step of laminating a moistureproof film. Consequently, the drying step is preferably conducted in such a manner that the constant-drying-rate step is performed gently and the falling-drying-rate step is performed at a temperature sufficient for solvent removal. A preferred method for gently performing the constant-drying-rate step is to partition the drying chamber through which the support runs into several zones and to increase the drying temperature by stages after completion of the application step.

### <Other Layers>

A cushioning layer may be imparted to the EL element as another measure for vibration inhibition. In this case, it is preferred to use a polymeric material having high impact-absorbing ability or a polymeric material which has been foamed with a blowing agent. Examples of the polymeric material having high impact-absorbing ability include natural rubber, styrene/butadiene rubbers, polyisoprene rubber, polybutadiene rubber, nitrile rubbers, chloroprene rubbers, butyl rubbers, Hypalon, silicone rubbers, urethane rubbers, ethylene/propylene rubbers,and fluororubbers. The hardnesses of these polymeric materials are preferably 50 or lower, more preferably 30 or lower, from the standpoint of vibration-absorbing ability. Butyl rubbers, silicone rubbers, fluororubbers, and the like are more preferred because they have low water absorption and, hence, function also as a protective film for protecting the EL element from water. It is also preferred to use as a cushioning material a material obtained by foaming any of those rubbery materials or a polypropylene, polystyrene, or polyethylene resin with a blowing agent added thereto. A cushioning layer comprising such a cushioning material may be bonded to the EL element with an adhesive. However, it is possible to dissolve a cushioning material in a solvent to prepare a coating fluid containing the cushioning material and apply this coating fluid with a slide coater or an extrusion coater. Although the thickness of the cushioning layer varies depending on the hardness of the polymeric material, it is preferably from 20 µm to 200 µm, more preferably from 50 µm to 200 µm, from the standpoint of sufficiently absorbing vibration. Cushioning layer thicknesses within that range are preferred also from the standpoints of the weight and flexibility of the element which are influenced by the element thickness.

### <Sealing>

It is preferred that the dispersion type EL element of the invention be finally processed with a sealing film so as to exclude influences of the moisture or oxygen present in the surrounding environment. The sealing film to be used for sealing the EL element is one whose moisture permeability as measured at 40°C and 90% RH is preferably 0.05 g/m²/day or lower, more preferably 0.01 g/m²/day or lower. Furthermore, the oxygen permeability thereof as measured at 40°C and 90% RH is preferably 0.1 cm³/m²/day/atm or lower, more preferably 0.01 cm³/m²/day/atm or lower. A preferred sealing film having such properties is a layered film which comprises an organic film and an inorganic film. Preferably used as the organic film are polyethylene resins, polypropylene resins, polycarbonate resins, poly (vinyl alcohol) resins, and the like. In particular, poly (vinyl alcohol) resins are more preferred. Since poly(vinyl alcohol) resins and the like have water-absorbing properties, these resins are preferably used after having been brought into an absolute dry state by a treatment such as, e.g., heating under vacuum. Any of those resins is formed into a sheet by a technique such as, e.g., coating fluid application, and an inorganic film is deposited on this sheet by vapor deposition, sputtering, CVD, or the like. Preferably used as the inorganic film to be deposited are silicon oxide, silicon nitride, silicon oxy-nitride, silicon oxide/aluminum oxide, aluminum nitride, and the like. In particular, silicon oxide is more preferred. For obtaining a lower moisture permeability and a lower oxygen permeability and for preventing the inorganic film from cracking upon bending, etc., it is preferred to employ a multilayer film obtained by repeatedly conducting the formation of an organic film and an inorganic film or by laminating through an adhesive layer two or more organic films each having an inorganic film deposited thereon. The thickness of the organic film is preferably from 5 to 300 µm, more preferably from 10 to 200 µm. The thickness of the inorganic film is preferably from 10 to 300 nm, more preferably from 20 to 200 nm. The thickness of the layered sealing film is preferably from 30 to 1,000 µm, more preferably from 50 to 300 µm. In the case where a sealing film having a moisture permeability of, for example, 0.05 g/m²/day or lower at 40°C and 90% RH is to be obtained, a film thickness of from 50 to 100 µm suffices for the constitution composed of superposed layers comprising two layers of the organic film described above and two layers of the inorganic film described above. In contrast, poly(chlorotrifluoroethylene), which has been used as sealing films, is required to have a film thickness of 200 µm or larger. Smaller thicknesses of the sealing film are preferred from the standpoints of light transmission and the flexibility of the element.

In the case where an EL cell is sealed with this sealing film, use may be made of a method in which the EL cell is sandwiched between two sheets of the sealing film and the peripheral part surrounding the cell is bonded for sealing. Alternatively, a method may be used in which one sheet of the sealing film is folded double and the overlapped part is bonded for sealing. The EL cell to be sealed with the sealing film may be one which alone has been separately produced. Alternatively, use may be made of a method in which the sealing film is used as a support and an EL cell is produced directly on this sealing film.

When a sealing film having a high moisture permeability and a high oxygen permeability is used, moisture and oxygen can be prevented from permeating the sealing film to reach the EL cell. In this case, however, the penetration of moisture and oxygen through the parts where the sealing film has been bonded to itself poses a problem. A drying-agent layer is hence disposed around the EL cell. Preferred examples of the drying agent for use in the drying-agent layer include the oxides of alkaline earth metals, such as CaO, SrO, and BaO, aluminum oxide, zeolites, activated carbon, silica gel, paper, and highly hygroscopic resins. In particular, the oxides of alkaline earth metals are more preferred from the standpoint of hygroscopicity. Such moisture absorbents may be used in the form of a powder. It is, however, preferred to dispose a drying-agent layer formed by mixing any of those moisture absorbers with a resin material and forming the resultantmixture into a sheet by coating fluid application, molding, etc., or by a method in which a coating fluid prepared by mixing with a resin material is applied with, e.g., a dispenser to a peripheral part surrounding the EL cell. It is more preferred to cover not only the peripheral part surrounding the EL element but also the upper and lower sides of the EL cell with a drying agent. In this case, it is preferred to select a highly transparent drying-agent layer for use on the light takeout side. As the highly transparent drying-agent layer can be used a polyamide resin or the like.

For the bonding of a sealing film to itself, a hot-melt adhesive or a UV-curable adhesive is preferably used. Especially from the standpoints of water permeability and workability, a UV-curable adhesive is more preferred. As the hot-melt adhesive can be used, for example, a polyolefin resin. As the UV-curable adhesive can be used, for example, an epoxy resin. In bonding a sealing film to itself, use may be made of a method which comprises applying an adhesive over the whole surface of the sealing film, disposing the EL cell and a drying-agent layer thereon, and then bonding the film to itself and curing the adhesive by heating or UV irradiation. Alternatively, use may be made of a method which comprises disposing the EL cell and a drying-agent layer on the sealing film, applying an adhesive to the region where the sealing film overlaps itself, and curing the adhesive.

The bonding of a sealing film can be conducted by a method in which the film is heated or irradiated with UV while applying a pressure thereto with a pressing machine or the like. It is, however, preferred that during the bonding operation, the inside of the sealing film or the sealing apparatus be kept vacuum or being filled with an inert gas having a controlled dew point, because this improves the life of the EL element. <Applications>

Applications of the invention are not particularly limited. However, for use as a light source, the luminescence color of the EL element preferably is white. Preferred methods for obtaining white luminescence are: a method in which luminescent particles which by themselves emit white light, such as luminescent zinc sulfide particles which have been activated with copper and manganese and have undergone gradual cooling after burning, are used; and a method in which luminescent particulate materials respectively emitting lights of the three primary colors or complementary colors are mixed together (e.g., a combination of blue/green/red or a combination of blue-green/orange). Also preferred is a method
in which a light having short wavelengths, such as blue light, is emitted and part of this luminescence is subjected to wavelength conversion to a green or red color (luminescence) with a fluorescent pigment or fluorescent dye to thereby obtain white luminescence, as described in JP-A-7-166161, JP-A-9-245511, and JP-A-2002-62530. When the color of the luminescence is expressed in terms of the CIE chromaticity coordinates (x, y), then the value of x is preferably in the range of from 0.30 to 0.43 and the value of y is preferably in the range of from 0.27 to 0.41.

The invention is effective especially in applications in which the electroluminescent element is caused to luminesce at a high luminance (e.g., 600 cd/m² or higher). Specifically, the invention is effective when the electroluminescent element is used under operating conditions in which a voltage of from 150 V to 500 V is applied between the transparent electrode and the back electrode or under such conditions that the element is operated with an AC power source having a frequency of from 800 Hz to 4,000 Hz.

A preferred method of using the electroluminescent element is one in which the electroluminescent element has an interlayer comprising an organic polymeric compound having a softening point of 140°C or higher (preferably 170°C or higher, more preferably 200°C or higher) and this element is operated with an AC power source having a voltage of from 150 V to 500 V and a frequency of from 800 Hz to 4,000 Hz.

In the invention, it is preferred to suitably combine the luminescent-particle-containing layer having the features described above, a sealing film, and a drying-agent layer with an EL element constitution. This is preferred because an EL element further improved in luminance, efficiency, and life can be provided.

### (Second Invention)

The second invention of the present invention will be explained next.

The following explanation is made only on the point in which the second invention differs from the first invention. With respect to the points which are not explainedparticularly, the explanations made with regard to the first invention described above suitably apply.

The EL element of this invention comprises a pair of opposed electrodes at least one of which is a transparent electrode and, disposed between the electrodes, a luminescent-particle-containing layer comprising an organic binder and luminescent particles dispersed therein, the electroluminescent element having at least one interlayer disposed between the transparent electrode and the luminescent-particle-containing layer, the interlayer comprising at least one organic polymer selected from polyesters, polycarbonates, polyamides, polyethersulfones, ultraviolet-cured resins obtained by the polymerization of acrylic esters and methacrylic esters,thermoset cyanate resins, and thermoset epoxy resins as a binder in an amount of 50% by volume or larger based on the interlayer-constituting material. Details of these organic polymeric compounds are the same as in the first invention described above.

### EXAMPLES

Examples of the dispersion type EL cells of the invention are shown below, but the dispersion type electroluminescent elements of the invention should not be construed as being limited to the following Examples.

### (EXAMPLE 1)

The first layer and second layer shown below were formed in this order on an aluminum electrode (back electrode) having a thickness of 70 µm, by applying respective coating fluids for layer formation. Furthermore, a poly(ethylene terephthalate) film (thickness, 75 µm) on which indium-tin oxide had been deposited by sputtering so as to form a transparent electrode having a thickness of 40 nm was press-bonded to the coated aluminum electrode with a 190°C heated roller in a nitrogen atmosphere so that the transparent electrode side (electroconductive side) faced the aluminum electrode and the transparent electrode was adjacent to the luminescent-particle-containing layer as the second layer.

The ingredient amounts for each layer shown below indicate the amounts by mass per square meter of the EL element.

| First Layer; Dielectric layer | |
|---|---|
| Cyanoethylpullulan | 14.0 g |
| Cyanoethylpoly(vinyl alcohol) | 10.0 g |
| Barium titanate particles (average diameter of corresponding spheres, 0.05 µm) | 100.0 g |

| Second Layer; Luminescent-particle-containing layer | |
|---|---|
| Cyanoethylpullulan | 18.0 g |
| Cyanoethylpoly (vinyl alcohol) | 12.0 g |
| Luminescent particles A | 120.0 g |
| Fluorescent dye (FA-001, manufactured by Sinloihi Co., Ltd.) | 2.5 g |

| | |
|---|---|
| * Luminescent particles A are described in Table 2. | |

Each layer was formed by adding dimethylformamide to the ingredients to prepare a coating fluid having a regulated viscosity, applying the coating fluid, and then drying the coating film at 110°C for 10 hours.

To the coated structure thus obtained, the film having a transparent electrode was press-bonded in the manner described above. An electrode terminal (aluminum plate having a thickness of 60 µm) was bonded to each of the aluminum electrode and the transparent electrode. Thereafter, the resultant structure was sealed with a sealing film (poly(chlorotrifluoroethylene); thickness, 200 µm) to obtain EL element 101.

Subsequently, EL elements 102 to 108 shown below were produced in the same manner as for EL element 101, except that the constitution was modified by, for example, changing the contents of the second layer or newly disposing an interlayer between the second layer and the transparent electrode. In the case where an interlayer was disposed, the interlayer was formed on the transparent electrode by coating fluid application and this interlayer-coated transparent electrode was press-bonded so that the interlayer side faced the aluminum electrode and the interlayer was adjacent to the luminescent-particle-containing layer as the second layer. These EL elements are compared in Table 1.

EL element 102: The EL element was produced in the same manner as for EL element 101, except that an interlayer formed by applying poly (vinyl alcohol) (softening point, about 90°C) in a thickness of about 70 µm was disposed between the transparent electrode and the luminescent-particle-containing layer.

EL element 103: The EL element was produced in the same manner as for EL element 101, except that an interlayer formed by applying poly(acrylacid n-butylamide) (softening point, about 50°C) in a thickness of 3 µm was disposed between the transparent electrode and the luminescent-particle-containing layer.

EL element 104: The EL element was produced in the same manner as for EL element 101, except that an interlayer formed by applying a polyester of bisphenol A with terephthalic acid and isophthalic acid (1:1) (softening point, 205°C) in a thickness of 1.5 µm was disposed between the transparent electrode and the luminescent-particle-containing layer.

EL element 105: The EL element was produced in the same manner as for EL element 101, except that an interlayer formed by applying a polycarbonate of bisphenol A (softening point, 150°C) in a thickness of 2 µm was disposed between the transparent electrode and the luminescent-particle-containing layer.

EL element 106: The EL element was produced in the same manner as for EL element 101, except that an interlayer formed by applying a polycarbonate of bisphenol A and 4,4'-(3,3,5-trimethylayclohoxylidene)bisphenol (molar ratio, 2 :1) (softening point, 210°C) in a thickness of 2 µm was disposed between the transparent electrode and the luminescent-particle-containing layer.

EL element 107: The EL element was produced in the same manner as for EL element 101, except that an interlayer comprising a 2 µm-thick film (softening point, 210°C) obtained by crosslinking/polymerizing dipentaerythritol hexaacrylate was disposed between the transparent electrode and the luminescent-particle-containing layer.

EL element 108: The EL element was produced in the same manner as for element 101, except that the luminescent particles A were replaced by the same mass amount of luminescent particles B.

EL element 109: The EL element was produced in the same manner as for element 102, except that the luminescent particles A were replaced by the same mass amount of luminescent particles B.

EL element 110: The EL element was produced in the same manner as for EL element 101, except that the luminescent particles A were replaced by the same mass amount of luminescent particles B, and that an interlayer formed by compounding a polyester of bisphenol A with terephthalic acid and isophthalic acid (1:1) (softening point, 205°C) with a barium titanate powder (average diameter of corresponding spheres, 0.1 µm) added in an amount of 25% by volume based on all these ingredients and applying the resultant composition in a thickness of 2 µm was disposed between the transparent electrode and the luminescent-particle-containing layer.

Element 111: The EL element was produced in the same manner as for element 110, except that the luminescent particles B were replaced by the same mass amount of luminescent particles C.

EL element 112: The EL element was produced in the same manner as for EL element 101, except that the luminescent particles A were replaced by luminescent particles B, and that an interlayer having a two-layer structure obtained by forming a 5 µm-thick layer having the same composition as the inter layer in element 110 by coating fluid application and forming thereon a 0.5-µm layer of poly(vinyl alcohol) was disposed between the transparent electrode and the luminescent-particle-containing layer.

Surface resistivities of the transparent electrodes used in the EL elements 101 to 112 were 20 Ω/□.

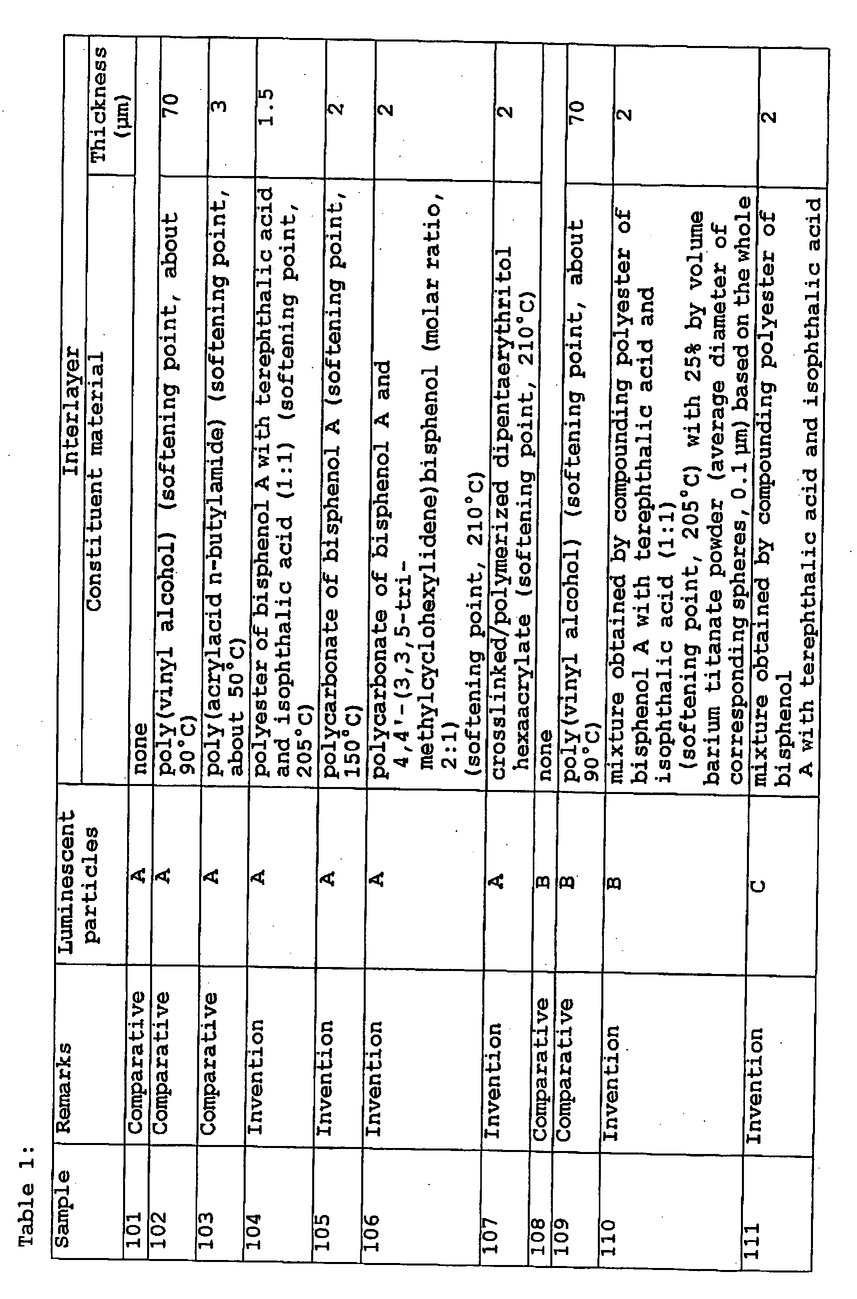

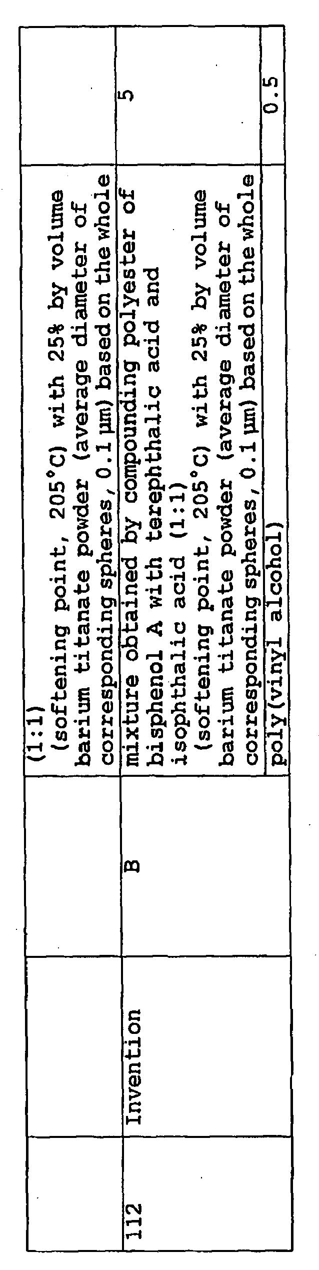

**Table 2: Luminescent Particles (each comprising zinc sulfide as base)**

| Particles | Average diameter of corresponding spheres (µm) | Average ratio of major-axis length to minor-axis length | Coating | Cu content (mol% based on zinc) | Cl content (mol% based on sulfur) |
|---|---|---|---|---|---|
| A | 30.0 | 1.5 | none | 0.12 | 0.12 |
| B | 14.0 | 1.7 | none | 0.09 | 0.11 |
| C | 14.0 | 1.7 | present* | 0.10 | 0.10 |

| | | | | | |
|---|---|---|---|---|---|
| * Coated with 0.03 µm-thick silicon dioxide layer. | | | | | |

Sodium chloroaurate was added to all particles in amount of 0.01 mol% based on zinc.

Using an AC power source having a frequency of 400 Hz, the EL elements thus obtained each were caused to luminesce by applying thereto a voltage which enabled the EL element to have a luminance of 200 cd/m². Each EL element was kept luminescent at the constant voltage for 14 days to examine a luminance change. This test was conducted in an atmosphere having a temperature and humidity kept at 25°C and 30% RH. The voltages in this test were about 100 V.

Furthermore, using an AC power source having a frequency of 1 kHz in the same atmosphere, each EL element was subjected to the same experiment in which a voltage which enabled the EL element to have a luminance of 800 cd/m² was applied. The voltages in this test were in the range of from 150 V to 250 V.

The results obtained are shown in Table 3, in which the decrease in luminance in each EL element is expressed in terms of proportion to the luminance decrease in EL element 101, which was taken as 100. The smaller the value, the less the luminance decreases and the more the EL element is preferred.

**Table 3:**

| Sample | Remarks | Luminance at 150 V*¹ | Luminance decrease after 14 days*¹ | |
|---|---|---|---|---|
| | | | Luminescence at 200 cd/m² | Luminescence at 800 cd/m² |
| 101 | comparative | 100 | 100 | 100 |
| 102 | comparative | 20 | 98 | 100 |
| 103 | comparative | 60 | 85 | 100 |
| 104 | invention | 85 | 50 | 35 |
| 105 | invention | 80 | 60 | 50 |
| 106 | invention | 80 | 45 | 30 |
| 107 | invention | 80 | 45 | 30 |
| 108 | comparative | 120 | 120 | 150 |
| 109 | comparative | 30 | 120 | 150 |
| 110 | invention | 110 | 40 | 40 |
| 111 | invention | 110 | 30 | 30 |
| 112 | invention | 90 | 30 | 30 |

| | | | | |
|---|---|---|---|---|
| *1: Proportion to sample 101. | | | | |

It can be seen from the results for samples 101; 102, and 103 that the combinations heretofore in use were less effective in improving EL element durability and, in particular, produced almost no effect when the elements were caused to luminesce at a high luminance. Furthermore, samples 102 and 109, in which a layer having a thickness of 70 µm had been formed, underwent a considerable decrease in luminance.

In contrast, in the samples having an interlayer according to the invention, a remarkable durability-improving effect was obtained (samples 104 to 107).

In the case where a reduced particle size was employed, the durability-improving effect in samples 110 to 112 according to the invention was especially remarkable as compared with samples 108 and 109, which each employed a related-art combination.

### [EXAMPLE 2]

### <Luminescent particles 2-A>

To 25 g of a zinc sulfide (ZnS) powder having an average particle diameter of 30 nm were added 0.1 mol% copper sulfate and 0.003 mol% chloroauric acid based on the ZnS. To the resultant dry powder were added an appropriate amount of NaCl, MgCl₂, and an ammonium chloride (NH₄Cl) powder as a fluxing agent and 20% by mass magnesium oxide powder based on the luminescent powder. The powder mixture obtained was put in an alumina crucible, burned at 1,200°C for 3.0 hours, and then cooled. Thereafter, the powder burned was taken out and pulverized/dispersed with a ball mill. The powder was further subjected to ultrasonic dispersion. Thereto were added 5 g of ZnCl₂ and 0.05 mol% copper sulfate based on the ZnS, followed by 1 g of MgCl₂. A dry powder mixture was thus prepared. This mixture was put in an alumina crucible again and burned at 700°C for 6 hours. This burning was conducted in a flowing atmosphere containing 10% oxygen gas.

The particles thus burned were pulverized again and dispersed in 40°C H₂O. The particles were sedimented and the supernatant was removed. After the particles were thus washed, 10% hydrochloric acid was added thereto to disperse the particles therein. The particles were sedimented and the supernatant was removed to thereby remove unnecessary salts. The particles were dried. Furthermore, the copper ions and the like adherent to the particle surface were removed with 10% KCN solution heated at 70°C. Moreover, using 6 mol/L hydrochloric acid, a surface layer was removed by etching in an amount corresponding to 10% by mass of the whole particles.

The particles thus obtained were screened through a sieve having an average opening size of 14 µm to take out smaller particles. Thus, luminescent particles were obtained.

The luminescent particles thus obtained had an average particle diameter of 10.3 µm and a coefficient of variation of 20%. Part of the particles were pulverized with a mortar and the crushed pieces having a thickness of 0.2 µm or smaller were taken out and examined with an electron microscope under the conditions of an accelerating voltage of 200 kV. As a result, at least 80% of the crushed piece particles were found to contain a part having 10 or more stacking fault layers at a layer-to-layer distance of 5 nm or shorter.

### <Luminescent particles 2-B>

The same procedure as in the production of luminescent particles 2-A was conducted, except that the amount of the MgCl₂ to be added as part of a fluxing agent was regulated, the burning temperature and period were changed to 1,250°C and 6 hours, and the screening was obtained. Thus, luminescent particles 2-B were obtained, which had an average particle diameter of 24 µm and a coefficient of variation of 43%.

EL elements were produced in the following manner. With respect to each element, the kinds of the transparent electroconductive layer (transparent electrode) and luminescent particles and whether an interlayer was present or not are shown in Table 4. The EL elements obtained are referred to as samples 2-1 to 2-12, respectively.

### <Dielectric Layer>

Fine BaTiO₃ particles having an average particle size of 0. 02 µm were dispersed in a 30% by mass cyano resin solution in an organic solvent. This dispersion was applied to an aluminum sheet having a thickness of 75 µm so as to result in a dielectric layer thickness of 25 µm. The coating was dried with a hot-air drying machine at 120°C for 1 hour to form a dielectric layer.

### <luminescent particles-containing Layer>

The luminescent particles obtained and fluorescent dye FA-001, manufactured by Sinloihi Co., Ltd. , were dispersed in a cyano resin solution having a concentration of 30% by mass and kneaded together. The luminescent particles and the dye were used in such amounts that the luminescence at 300 cd/m² had a color in which x=3.3±0.3 and y=3.4±0.3 in the CIE chromaticity coordinates. The dispersion was applied on the dielectric layer so as to result in a thickness of 50 µm.

### <Formation of Interlayer>

A coating fluid prepared by dispersing fine BaTiO₃ particles having an average particle size of 0.02 µm in a cyano resin solution in an amount which was 1/5 the amount in the case of the dielectric layer was applied on the luminescent particles-containing layer so as to result in a thickness of 2 µm. Thus, an interlayer was formed.

### <Transparent Electroconductive Layers (Transparent Electrodes)>

Transparent Electroconductive Layer A: ITO was vapor-deposited on a transparent film made of poly(ethylene terephthalate) to produce transparent electroconductive layer A having an area of 0.5 m × 0.7 m. This layer had a surface resistivity of 150 Ω/□ and a light transmittance of 88%.

Transparent Electroconductive Layer B: IZO (indium-zinc oxide) was vapor-deposited on the same transparent film as for transparent electroconductive layer A to produce a thin layer comprising the metal oxide. This layer had a surface resistivity of 350 Ω/□ and a light transmittance of 93%. A pattern layer comprising thin nickel lines with a width of 20 µm and a height of 5 µm disposed in a stripe arrangement at a pitch of 500 µm was produced on the thin metal oxide layer by vapor deposition with a mask. Thus, transparent electroconductive layer B having the same area as transparent electroconductive filmAwas obtained. This layer had a surface resistivity of 5 Ω/□ and a light transmittance of 87%.

Transparent Electroconductive layer C: IZO was vapor-deposited on the same transparent film as for transparent electroconductive layer A to produce a thin layer comprising the metal oxide. This layer had a surface resistivity of 350 Ω/□ and a light transmittance of 93% . Gold was vapor-deposited in a thickness of 10 nm on the thin metal oxide layer obtained to thereby form a thin metal layer. Thus, transparent electroconductive layer C having the same area as transparent electroconductive filmAwas obtained. This layer had a surface resistivity of 10 Ω/□ and a light transmittance of 70%.

Transparent Electroconductive Layer D: ITO was vapor-deposited on the same transparent film as for transparent electroconductive layer A to produce a thin layer comprising the metal oxide. This layer had a surface resistivity of 150 Ω/□ and a light transmittance of 88%. As in the production of transparent electroconductive layer B, a pattern layer comprising thin nickel lines with a width of 20 µm and a height of 5 µm disposed in a stripe arrangement at a pitch of 500 µm was produced on the thin metal oxide layer by vapor deposition with a mask. Thus,transparent electroconductivelayer D having the same area as transparent electroconductive film A was obtained. This layer had a surface resistivity of 10 Ω/□ and a light transmittance of 85%.

Using copper/aluminum sheets each having a thickness of 80 µm, terminals for external connection were attached respectively to each transparent electroconductive layer serving as an electrode and the back side (the side opposite to the superposed layers) of the aluminum sheet serving as the other electrode. Thereafter, this element was sandwiched between two moistureproof films having an SiO₂ layer so that the transparent electroconductive layer was adjacent to the interlayer. This assemblage was press-bonded with heating.

Each sample was operated at 1 kHz at an initial luminance of 500 cd/m². The sample was kept luminescent under these conditions at 25°C and 60% to evaluate the half-luminance time, using sample 2-1 as a control. The results obtained are shown in Table 4.

**Table 4:**

| Sample | Transparent electroconductive layer | Luminescent Particles | Presence or absence of interlayer, thickness of the layer | Half-luminance time (hour) |
|---|---|---|---|---|
| 2-1 (comparative) | A | A | present, 2 µm | 70 |
| 2-2 (invention) | B | A | present, 2 µm | 180 |
| 2-3 (invention) | C | A | present, 2 µm | 350 |
| 2-4 (invention) | D | A | present, 2 µm | 300 |
| 2-5 (comparative) | A | A | none | 45 |
| 2-6 (comparative) | B | A | none | 60 |
| 2-7 (comparative) | C | A | none | 80 |
| 2-8 (comparative) | D | A | none | 70 |
| 2-9 (comparative) | A | B | present, 2 µm | 65 |
| 2-10 (invention) | B | B | present, 2 µm | 150 |
| 2-11 (invention) | C | B | present, 2 µm | 200 |
| 2-12 (invention) | D | B | present, 2 µm | 180 |

### [EXAMPLE 2-2]

The EL elements produced as samples 2-1 to 2-12 in Example 2-1 each were (a) processed into a size of 0.5 m × 0.8 m and, separately from that, (b) processed into a size of 0. 05 m × 0.10 m. The samples of these two sizes were examined for the relationship between the dependence of initial luminance on driving frequency and the half-luminance time. In each element according to the invention, the initial luminance in a frequency range of from 400 Hz to 2 kHz of sample (a) was lower than that of sample (b) by less than 10%. In contrast, in each comparative element, a decrease of 10% or more was observed. Furthermore, in each element according to the invention, the half-luminance time of sample (a) was shorter than that of sample (b) by 5% or less. In contrast, in each comparative element, a decrease of 10% or more was observed. It became apparent that the luminance-improving effect of the invention is markedly produced in large sizes and that the effect of prolonging the half-luminance life is remarkable.

This application is based on Japanese Patent application JP 2004-250155, filed August 30, 2004, and Japanese Patent application JP 2004-254116, filed September 1, 2004, the entire contents of which are hereby incorporated by reference, the same as if set forth at length.

## Claims

1. An electroluminescent element comprising:
a pair of electrodes at least one of which is a transparent electrode; and
a luminescent-particle-containing layer provided between the electrodes and comprising an organic binder and luminescent particles,
wherein the electroluminescent element further comprises at least one interlayer which makes substantially no contribution to luminescence and is provided between the transparent electrode and the luminescent-particle-containing layer, the interlayer comprising an organic polymeric compound having a softening point of 140°C or higher as a binder.

2. An electroluminescent element comprising:
a pair of electrodes at least one of which is a transparent electrode; and
a luminescent-particle-containing layer provided between the electrodes and comprising an organic binder and luminescent particles,
wherein the electroluminescent element further comprises at least one interlayer which makes substantially no contribution to luminescence and is provided between the transparent electrode and the luminescent-particle-containing layer, the interlayer comprising at least one organic polymer selected from polyesters, polycarbonates, polyamides, polyethersulfones, ultraviolet-cured resins obtained by a polymerization of acrylic esters and methacrylic esters, thermoset cyanate resins, and thermoset epoxy resins as a binder in an amount of 50% by volume or larger based on materials constituting the interlayer.

3. The electroluminescent element according to claim 1, wherein the interlayer has a thickness of from 1 µm to 10 µm.

4. The electroluminescent element according to claim 2, wherein the interlayer has a thickness of from 1 µm to 10 µm.

5. The electroluminescent element according to claim 1, wherein the transparent electrode has a surface resistivity of from 0.05 to 80 Ω/□.

6. The electroluminescent element according to claim 2, wherein the transparent electrode has a surface resistivity of from 0.05 to 80 Ω/□.

7. The electroluminescent element according to claim 1, wherein the transparent electrode comprises:
a layer comprising a metal oxide; and
a pattern layer formed in a net or stripe arrangement and comprising at least one member selected from metals and alloys.

8. The electroluminescent element according to claim 2, wherein the transparent electrode comprises:
a layer comprising a metal oxide; and
a pattern layer formed in a net or stripe arrangement and comprising at least one member selected from metals and alloys.

9. The electroluminescent element according to claim 1, wherein the transparent electrode comprises:
a layer comprising a metal oxide; and
a metal layer.

10. The electroluminescent element according to claim 2, wherein the transparent electrode comprises:
a layer comprising a metal oxide; and
a metal layer.

11. The electroluminescent element according to claim 1, wherein the luminescent particles has a size of from 1.0 to 15 µm in terms of an average diameter of corresponding spheres.

12. The electroluminescent element according to claim 2, wherein the luminescent particles has a size of from 0.1 to 25 µm in terms of an average diameter of corresponding spheres.
